# EUROPÄISCHE PATENTSCHRIFT

(11) **EP 0 841 302 B1**
(45) Veröffentlichungstag und Bekanntmachung des Hinweises auf die Patenterteilung: **30.05.2001**
(21) Anmeldenummer: 97117128.5
(22) Anmeldetag: 02.10.1997
(51) Int. Cl.: C01B 3/38, C01B 3/36, B01J 8/00

(54) **Reaktor zum autothermen Umsetzen von Kohlenwasserstoffen**
Reactor for autothermal conversion of hydrocarbons
Réacteur de conversion autothermique d'hydrocarbures

(30) Priorität: 07.11.1996 DE 19645855
(43) Veröffentlichungstag der Anmeldung: 13.05.1998
(73) Patentinhaber: mg technologies ag, 60325 Frankfurt am Main (DE)
(72) Erfinder: Göhna, Hermann, 65812 Bad Soden (DE)
(74) Vertreter: Revesz, Veronika

(56) Entgegenhaltungen:
- DE-A- 4 344 535
- DE-C- 3 612 218
- US-A- 4 400 180
- PATENT ABSTRACTS OF JAPAN vol. 002, no. 043 (C-008), 23. März 1978 & JP 52 150776 A (SAKAI CHEM IND CO LTD), 14. Dezember 1977
- B.ELVERS ET AL.: "Ullmann's encyclopedia of industrial chemistry, vol. A12" 1990 , VCH VERLAG , WEINHEIM, DE XP002085682 017317 * Seite 202 - Seite 204 *

## Beschreibung

Die Erfindung betrifft ein Reaktor zum autothermen Umsetzen eines kohlenwasserstoffhaltigen Gases mit einem O₂-reichen Gas, wobei das kohlenwasserstoffhaltige Gas durch eine Transferleitung herangeführt wird und in mindestens einen, zum Reaktor gehörenden Brenner eintritt, dem man auch das O₂-reiche Gas durch eine Leitung zuführt.

Der Reaktor dieser Art ist bekannt und z.B. in Ullmann's Encyclopedia of Industrial Chemistry, Band A12, Seiten 202 bis 204, beschrieben. Einzelheiten der Transferleitung sind aus dem DE-Patent 44 31 954 bekannt. In JP-A-52150776 wird ein bewegbares Sieb zum Auffangen von Festkörpern vor einem Katalysatorbett beschrieben. Beim Betrieb der eingangs genannten Reaktoren hat es sich gezeigt, dass im Bereich des Brenners Störungen auftreten können, welche den gleichmäßigen Gasfluss im Brenner behindern.

Die Folge können Schäden im Mündungsbereich des Brenners sein, auch treten hierdurch unerwünschte Temperaturspitzen im Reaktor und insbesondere im oberen Bereich der Katalysatorschüttung auf.

Der Erfindung liegt die Aufgabe zugrunde, die Betriebssicherheit des Reaktors auf einfache und kostengünstige Weise zu erhöhen. Erfindungsgemäß geschieht dies beim eingangs genannten Reaktor dadurch, dass eine siebartig gelochte, vom kohlenwasserstoffhaltigen Gas durchströmbare Wand in einem mit der Transferleitung verbundenen, im Brenner angeordneten Ringraum angeordnet ist, der die Leitung für das 02-reiche Gas umgibt, und dass die gelochte Wand zylindrisch ausgebildet ist und die das O₂-reiche Gas führende Leitung koaxial umgibt.

Die gelochte Wand vergleichmäßigt die Gasströmung im Brenner. Gleichzeitig verhindert die Wand, dass Fremdkörper ab einer gewissen Größe in den empfindlichen Bereich des Brenners eindringen und sich dort festsetzen können. Bei solchen störenden Festkörpern kann es sich z.B. um Bruchstücke der Ausmauerung der Transferleitung handeln. Solche Bruchstücke entstehen z.B. durch die erheblichen Wärmedehnungen, denen die Transferleitung üblicherweise ausgesetzt ist. Die Wand kann beispielsweise aus legiertem Stahl oder Keramik hergestellt werden.

Die Temperaturen des Gases, das durch die Transferleitung in den Brenner geführt wird, liegen im Bereich von 100 bis 1300°C und häufig bei mindestens 500°C. Bei dem durch die Transferleitung dem Brenner zugeführten Gas kann es sich z. B. um vorgewärmtes Erdgas handeln, auch kann das Erdgas mit einem Spaltgas gemischt werden, welches aus einem Röhrenreaktor stammt, der der Dampfreformierung von Kohlenwasserstoffen dient. Das vom Röhrenreaktor kommende Spaltgas ist dann reich an H₂ und CO und enthält üblicherweise daneben noch Methan.

Ausgestaltungsmöglichkeiten des Verfahrens werden mit Hilfe der Zeichnung erläutert. Es zeigt:
Fig. 1 in schematischer Darstellung die Kopplung eines Röhrenreaktors mit einem Reaktor zum autothermen Umsetzen von Kohlenwasserstoffen,
Fig. 2 den erfindungsgemäß ausgestalteten Brenner des Reaktors im Längsschnitt und
Fig. 3 einen Querschnitt nach der Linie III-III in Fig. 2.

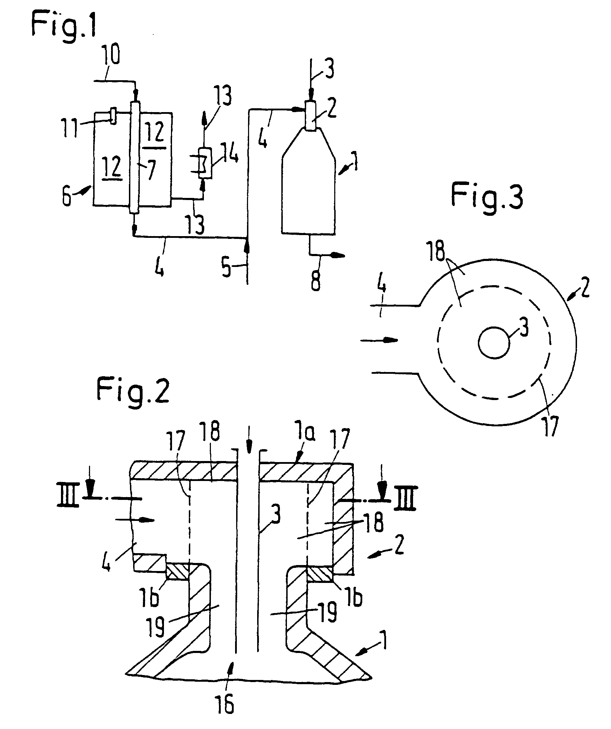

In Fig. 1 ist der Reaktor (1) zum autothermen Umsetzen von kohlenwasserstoffhaltigem Gas mit einem O₂-reichen Gas schematisch dargestellt. Im folgenden wird der Reaktor verkürzt als "Autotherm-Reaktor" bezeichnet. Am oberen Ende weist der Reaktor (1) einen Brenner (2) auf, dem man durch die Leitung (3) O₂-reiches Gas, z. B. technisch reinen Sauerstoff, zuführt. Die Transferleitung (4) führt kohlenwasserstoffhaltiges Gas heran, es kommt im Beispiel der Fig. 1 teilweise von einem Röhrenreaktor (6), der an sich bekannt ist und der Dampfreformierung von Kohlenwasserstoffen dient. Zusätzlich kann man in die Transferleitung (4) durch die Leitung (5) Kohlenwasserstoffe, z. B. Erdgas, zugeben. In an sich bekannter Weise ist der Reaktor (1) mit der Schüttung eines körnigen Nickelkatalysators ausgestattet. Das vom Brenner (2) kommende heiße Gas strömt durch diese Katalysatorschüttung, so daß ein H₂- und CO-reiches Produktgas entsteht, welches man in der Leitung (8) abzieht. Dieses Produktgas kann z. B. ganz oder teilweise für die Methanolsynthese verwendet werden.

Der Röhrenreaktor (6) weist zahlreiche Röhren (7) auf, in denen sich eine Schüttung eines Nickelkatalysators befindet. Umzusetzendes Gemisch aus Kohlenwasserstoffen, z. B. Erdgas, und Wasserdampf führt man durch die Leitung (10) zu. Die in den Röhren (7) ablaufende endotherme Reaktion wird durch eine indirekte Beheizung ermöglicht. Für diese Beheizung sorgen zahlreiche Brenner (11), deren Zuleitungen nicht dargestellt sind. Heißes Verbrennungsgas im Feuerraum (12) beheizt die Röhren (7) und strömt schließlich durch die Leitung (13) ab, wobei fühlbare Wärme im Wärmeaustauscher (14) genutzt wird.

Einzelheiten des Brenners (2) ergeben sich aus den Fig. 2 und 3. Das O₂-reiche Gas strömt durch die Leitung (3) nach unten zur Brennermündung (16). Durch die Transferleitung (4) wird das kohlenwasserstoffhaltige Gas herangeführt, und es strömt zunächst durch eine zylindrische, siebartig gelochte Wand (17).

Diese Wand befindet sich in einem Ringraum (18), der die Leitung (3) umgibt. Vom Ringraum (18) führt ein Ringspalt (19) zur Brennermündung (16). Im Bereich der Mündung (16) trifft das Gas aus dem Ringspalt (19) mit dem O₂-reichen Gas der Leitung (13) zusammen, wobei exotherme Reaktionen unter Flammenbildung einsetzen. Das Gasgemisch strömt dann im Reaktor (1) nach unten durch eine Katalysatorschüttung, die in Fig. 2 nicht dargestellt ist.

Die gelochte zylindrische Wand (17) sorgt für eine möglichst gleichmäßige Gasverteilung, insbesondere im Ringspalt (19). Gleichzeitig hält die Wand (17) alle größeren Festkörper auf, die sich in Strömungsrichtung vor der Wand sammeln. Das Gehäuse (la), das die Außenseite des Brenners (2) bildet, weist einen Gehäusering (1b) auf, der lösbar angeordnet ist und von Zeit zu Zeit entfernt wird, um vor der Wand (17) angesammelte Festkörper abzuziehen. Dies kann während einer kurzen Betriebsunterbrechung geschehen.

## Patentansprüche

1. Reaktor zum autothermen Umsetzen eines kohlenwasserstoffhaltigen Gases mit einem O₂-reichen Gas, wobei das kohlenwasserstoffhaltige Gas durch eine Transferleitung (4) herangeführt wird und in mindestens einen, zum Reaktor gehörenden Brenner (2) eintritt, dem man auch das O₂-reiche Gas durch eine Leitung (3) zuführt, dadurch gekennzeichnet, dass eine siebartig gelochte Wand (17) in einem mit der Transferleitung verbundenen, im Brenner angeordneten Ringraum (18) angeordnet ist, der die Leitung für das O₂-reiche Gas umgibt, und dass die gelochte Wand zylindrisch ausgebildet ist und die das O₂-reiche Gas führende Leitung (3) koaxial umgibt.

2. Reaktor nach Anspruch 1, dadurch gekennzeichnet, dass in Strömungsrichtung vor der siebartig gelochten Wand eine verschließbare Öffnung zum Entfernen von Festkörpern angeordnet ist.

## Claims

1. A reactor for the autothermal conversion of a hydrocarbonaceous gas with a gas rich in O₂ where the hydrocarbonaceous gas is supplied through a transfer line (4) and enters at least one burner (2) associated to the reactor, to which the gas rich in O₂ is also supplied through a line (3), characterized in that a screen-like perforated wall (17) is provided in an annular chamber (18) connected with the transfer line and disposed in the burner, said annular chamber surrounds the line for the gas rich in O₂ and that the screen-like perforated wall is cyclindrical and coaxially surrounds the line carrying the gas rich in O₂.

2. Reactor as claimed in claim 1, characterized in that in flow direction in front of the screen-like perforated wall there is provided a sealable opening for removing solid matter.

## Revendications

1. Réacteur de réaction autothermique d'un gaz hydrocarboné sur un gaz riche en O₂, le gaz hydrocarboné étant amené par un conduit (4) de transfert et entrant dans au moins un brûleur (2) qui fait partie du réacteur et auquel est envoyé par un conduit (3) également le gaz riche en O₂, caractérisé en ce qu'une paroi (17) perforée à la manière d'un tamis est disposée dans une chambre (18) annulaire qui communique avec le conduit de transfert, qui est ménagée dans le brûleur et qui entoure le conduit pour le gaz riche en O₂ et la paroi perforée est cylindrique et entoure coaxialement le conduit (3) dans lequel passe le gaz riche en O₂.

2. Réacteur suivant la revendication 1, caractérisé en ce qu'il est prévu en amont dans le sens du courant de la paroi perforée de type tamis, une ouverture qui peut être fermée et qui est destinée à enlever les corps solides.
